# EUROPÄISCHE PATENTANMELDUNG

(11) **EP 3 553 927 A1**
(43) Veröffentlichungstag der Anmeldung: **16.10.2019**
(21) Anmeldenummer: 18167306.2
(22) Anmeldetag: 13.04.2018
(51) Int. Cl.: H02K 15/04, H01F 41/06

(54) **WELLENWICKELVORRICHTUNG UND WELLENWICKELVERFAHREN**

(71) Anmelder: Aumann Espelkamp GmbH, 32339 Espelkamp (DE)
(72) Erfinder: Lüttge, Wolfgang, 31787 Hameln (DE)
(74) Vertreter: Schober, Mirko

(57) **Zusammenfassung**

Eine Wellenwickelvorrichtung weist eine Drahtauslassdüsenanordnung (1) zum Zuführen eines Wickeldrahts (2) oder einer Mehrzahl von Wickeldrähten (2) auf. Sie weist ferner wenigstens ein Drahtendenaufnahmeelement (10) auf, welches zur Aufnahme wenigstens eines Drahtendabschnitts des Wickeldrahtes (2) ausgebildet ist. Ferner weist die Wellenwickelvorrichtung ein, insbesondere angetriebenes, Wickelelement (20) auf, welches um eine Drehachse (A) drehbar gelagert ist und auf oder an welchem das Drahtendenaufnahmeelement (10) drehfest montiert, insbesondere aufgeschoben, werden kann.

## Beschreibung

Die Erfindung betrifft eine Wellenwickelvorrichtung und ein Wellenwickelverfahren.

Bei Wickelverfahren, insbesondere bei der Herstellung von Wellenwicklungen, wird ein Wickeldraht oder werden eine Mehrzahl paralleler Wickeldrähte aus Drahtauslassdüsen einem zu bewickelndem Formkern zugeführt.

Bei dem in EP 3 182 568 beschriebenen Verfahren wird eine Mehrzahl Wickeldrähte dem rotierenden Formkern einer Wickeleinrichtung zugeführt. Mittels Greifern wird der auf dem Formkern befindliche Draht gegriffen und zur Herstellung der Wickelköpfe der Wellenwicklung in einer Vorschubrichtung bewegt. Dabei werden auf dem Formkern Wellenwicklungen gebildet und daraus wird eine Wellenwickelmatte erzeugt. Mit der bekannten Vorrichtung lassen sich Wickelmatten in beliebiger Länge mit relativ kleinem Formkern formen.

Jede Wellenwicklung hat einen Anfang und ein Ende, da sie aus Drähten besteht, die ihrerseits wiederum Drahtenden aufweisen. Je nach späterem Verwendungszweck müssen die Drahtenden eine bestimmte Mindestlänge aufweisen, damit sie im späteren Anwendungsfall, zum Beispiel als Bestandteil des Stators einer elektrischen Maschine, ordnungsgemäß kontaktiert werden können. Da lange Drahtenden beim Transportprozess die Weiterverarbeitung der Wellenwickelmatte stören können, werden bislang in der Regel sehr kurze Drahtenden erzeugt, die dann in einem späteren Prozess zum Zwecke der Kontaktierung verlängert werden müssen. Dies ist aufwändig.

Aufgabe der vorliegenden Erfindung ist es daher, eine Wellenwickelvorrichtung und ein Wellenwickelverfahren zu schaffen, mit denen sich Wellenwickelmatten mit Drahtenden von nahezu beliebiger Länge herstellen lassen, insbesondere ohne das Verfahren durch Störkonturen zu behindern oder die Produkteigenschaften des Verbindungsdrahtes für die Kontaktierung zu verschlechtern.

Gelöst wird diese Aufgabe durch eine Wellenwickelvorrichtung mit den Merkmalen des Anspruchs 1 und ein Wellenwickelverfahren mit den Merkmalen des Anspruchs 10. Vorteilhafte Ausführungsformen finden sich in den abhängigen Ansprüchen.

Die erfindungsgemäße Wellenwickelvorrichtung weist dazu eine Drahtauslassdüsenanordnung zum Zuführen von einem Wickeldraht oder einer Mehrzahl von Wickeldrähten sowie wenigstens ein Drahtendenaufnahmeelement auf, welches zur Aufnahme wenigstens eines Drahtendabschnitts des Wickeldrahtes ausgebildet ist. Ferner umfasst die erfindungsgemäße Vorrichtung ein, insbesondere angetriebenes, Wickelelement, welches um eine Drehachse drehbar gelagert ist. Auf oder an dem Wickelelement kann das Drahtendenaufnahmeelement drehfest montiert, insbesondere aufgeschoben, werden.

Auf diese Weise ist es möglich, beliebig lange Drahtenden zu konfektionieren, indem diese auf das Drahtentenaufnahmeelement durch Drehen des Wickelelementes aufgewickelt werden. Je nach Anzahl der Umdrehungen des Drahtendenaufnahmeelements können also unterschiedlich lange Drahtenden erzeugt werden, ohne dass diese im weiteren Prozess stören. Der Leiterquerschnitt wird durch eine passende Auslegung des Wickelradius nicht verändert, wodurch die produktrelevanten Eigenschaften des Verbindungsdrahtes erhalten bleiben. Die Isolation des Drahtes wird ebenfalls nicht beeinträchtigt.

Nach einer bevorzugten Ausführungsform der vorliegenden Erfindung kann vorgesehen sein, dass das Drahtendenaufnahmeelement eine, insbesondere bogenförmige, Nut oder eine Mehrzahl, insbesondere bogenförmige, Nuten zur Aufnahme wenigstens eines darauf aufgewickelten Drahtendabschnitts aufweist. Auf diese Weise wird verhindert, dass sich die aufgewickelten Drähte ineinander verstricken, was das spätere Wiederablösen des Drahtendenaufnahmeelementes erleichtert.

Eine weitere erfindungsgemäße Ausführungsform kann vorsehen, dass das Drahtendenaufnahmeelement wenigstens eine, insbesondere als Schlitz ausgebildete, Drahteinführöffnung zum Einführen des Drahtendabschnitts aufweist. Diese Drahteinführöffnung kann auch dazu dienen, den Draht beim Einführen festzuklemmen, festzuhalten und/oder zu fixieren. Bei dieser Ausgestaltung kann ein freies Ende eines Drahtes auf einfache Weise in den Eingriffsbereich des Drahtendenaufnahmeelements gebracht werden. Nach Einschieben in die Drahteinführöffnung und Durchdrehen des Drahtendenaufnahmeelements mittels des Wickelelementes, wird der Draht umgebogen und dadurch beim weiteren Drehen festgehalten. Auf diese Weise wird verhindert, dass der Draht sich unbeabsichtigter Weise vom Drahtendenaufnahmeelement trennt.

Das Drahtendenaufnahmeelement ist bevorzugt so gestaltet, dass es sich nach Art einer Spule verwenden lässt. Nach einer besonderen Ausführungsform ist das Drahtendenaufnahmeelement ein aus zwei auf der Außenseite bogenförmigen Segmenten gebildetes Element mit einem zylindrischen, bevorzugt kreiszylindrischen, Hüllkörper. Dabei kann bevorzugt vorgesehen sein, dass zwischen den Segmenten eine, insbesondere als Schlitz ausgebildete, Drahteinführöffnung angeordnet ist. Die beiden Segmente können im Prinzip baugleich sein. Auf diese Weise lässt sich durch Zusammenfügen der beiden Segmente ein entsprechender Drahtaufnahmeschlitz auf besonders einfache Weise realisieren.

Nach einer bevorzugten Ausführungsform können die Segmente an einer ihrer in Axialrichtung des Hüllkörpers liegenden Stirnseiten miteinander verbunden sein. Bei dieser Ausführungsform ist dann der gesamte Drahtaufnahmeschlitz frei von störenden Abschnitten, die das Einführen des Drahtes in den Drahtaufnahmeschlitz behindern könnten.

Eine mögliche Verbindung der Segmente kann so realisiert sein, dass die Segmente über wenigstens einen Stegabschnitt miteinander verbunden sind.

Insbesondere für die drehfeste Verbindung zwischen Wickelelement und Drahtendenaufnahmeelement kann gemäß einer weiteren bevorzugten Ausführungsform der vorliegenden Erfindung vorgesehen sein, dass das Wickelelement eine Aufnahmekontur, insbesondere eine Aussparung, bevorzugt einen Schlitz, aufweist, wobei die Aufnahmekontur zur Aufnahme, zur Fixierung und/oder Mitnahme des Drahtendenaufnahmeelements dient. So genügt beispielsweise in dieser Ausgestaltung ein einfaches Aufstecken oder Aufschieben des Drahtendenaufnahmeelements auf das Wickelelement, um eine drehfeste Verbindung herzustellen.

Schließlich kann die erfindungsgemäße Wellenwickelvorrichtung auch eine Trennvorrichtung zum Abtrennen des Wickeldrahtes aufweisen. Dies ist insbesondere dann von Vorteil, wenn ein Teil der Drahtenden erst nach Fertigstellung der eigentlichen Wellenwickelmatte mit dem entsprechenden Drahtendenaufnahmeelement versehen werden soll. In diesem Fall wird die Drahtzufuhr über die Trennvorrichtung getrennt und es werden dann die daraus entstehenden Drahtenden in ein Drahtaufnahmeelement eingeführt und entsprechend darauf aufgewickelt.

Die Erfindung betrifft ferner ein Wellenwickelverfahren, bei dem insbesondere eine oben näher beschriebene Wellenwickelvorrichtung eingesetzt wird. Bei diesem Verfahren wird die Wellenwickelmatte aus einer Mehrzahl Wickeldrähten erzeugt. Erfindungsgemäß wird bei dem Verfahren ein Schritt i) ausgeführt, bei dem die Drahtendabschnitte der Wickeldrähte auf ein Drahtendenaufnahmeelement aufgewickelt werden.

Das Aufwickeln der Drahtenden auf das Drahtendenaufnahmeelement kann an jeder beliebigen Stelle der Wellenwickelmatte erfolgen, kann aber bevorzugt sowohl am Anfang der Wellenwickelmatte und/oder am Ende der Wellenwickelmatte durchgeführt werden. Nach einer besonders bevorzugten Ausführungsform der vorliegenden Erfindung ist daher vorgesehen, dass der Schritt i) vor und/oder nach dem Herstellen der Wellenwickelmatte ausgeführt wird. Dies geschieht, indem Drahtendabschnitte einem Drahtendenaufnahmeelement zugeführt und auf dieses Drahtendenaufnahmeelement in einer vorgegebenen Länge aufgewickelt werden. Die Anzahl der Wicklungen bzw. Umdrehungen des Wickelelements bestimmt dabei letztlich die gewünschte Länge der Drahtenden, die zur Verschaltung der Wellenwickelmatte zur Verfügung gestellt werden sollen.

Bevorzugt wird zur Durchführung des erfindungsgemäßen Verfahrens zunächst ein Drahtendenaufnahmeelement bereitgestellt und an einem Wickelelement montiert. Bevorzugt kann dabei das Drahtendenaufnahmeelement auf das Wickelelement aufgeschoben werden. Sodann werden Drahtendabschnitte dem Drahtendenaufnahmeelement zugeführt und von diesem gefasst und durch Drehen des Wickelelements und Mitdrehen des Drahtendenaufnahmeelements aufgewickelt.

Nach dem oben beschriebenen Schritt i) kann optional ein Schränken der Wickeldrähte erfolgen. So kann der Draht in Entstehungsrichtung der Wellenwickelmatte weitertransportiert werden.

Gemäß einer bevorzugten Ausführungsform des erfindungsgemäßen Verfahrens ist vorgesehen, dass nach dem Schritt i) Wickelelement und Drahtendenaufnahmeelement voneinander getrennt werden. So kann die Wellenwickelmatte lediglich mit dem Drahtendenaufnahmeelement bestückt durch die weitere Produktionsanlage geschoben werden. Das Wickelelement selbst kann dann ortsfest oder in einem bestimmten Bereich der Anlage verbleiben und für den nächsten Drahtendenaufnahmeprozess gerüstet werden.

Die Erfindung wird nachfolgend anhand der Figuren 1 - 7 näher erläutert.
- Figur 1 -: zeigt ein beispielhaftes erfindungsgemäßes Drahtendenaufnahmeelement in perspektivischer Darstellung,
- Figur 2 -: zeigt eine Situation zu Beginn des Drahtenden-aufnahmeprozesses, bei welchem das Drahtendenaufnahmeelement am Wickelelement montiert wird,
- Figur 3 -: zeigt eine Situation, bei der das Wickelelement den aufzuwickelnden Drahtenden zugestellt wird,
- Figur 4 -: zeigt die Drehbewegung des Wickelelements zum Aufrollen des Wickeldrahtes,
- Figur 5 -: zeigt eine Endstellung des Wickelelements nach erfolgtem Aufwickeln,
- Figur 6 -: zeigt eine Relativbewegung zwischen dem Wickelelement und einer Drahtauslassdüsenanordnung zum Schränken des Wickeldrahtes,
- Figur 7 -: zeigt den Trennvorgang zwischen Wickelelement und Drahtendenaufnahmeelement.

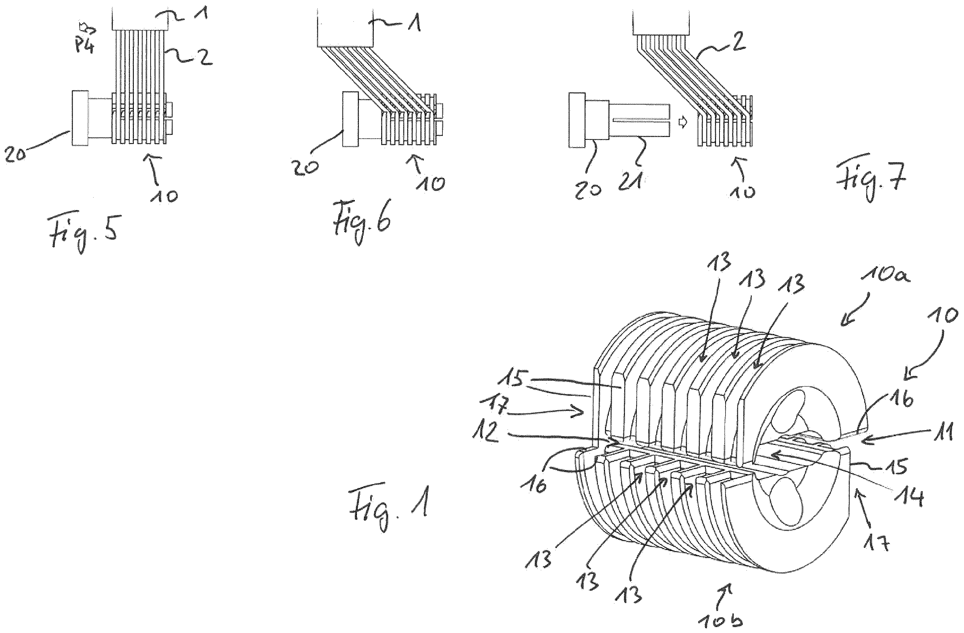

Die erfindungsgemäße Wellenwickelvorrichtung weist bevorzugt ein in Figur 1 gezeigtes Drahtendenaufnahmeelement 10 auf. Das Drahtendenaufnahmeelement 10 ist im gezeigten Beispiel aus 2 miteinander verbundenen, bevorzugt als Halbschalen ausgebildeten, Segmente 10a, 10b (im Nachfolgenden nicht einschränkend "Halbschalen" genannt) gebildet, die zwischen sich eine bevorzugt als Schlitz ausgebildete Drahteinführöffnung 11, 12 ausbilden. Diese im Folgenden als Schlitz bezeichnete Öffnung dient bei der Verwendung des erfindungsgemäßen Drahtendenaufnahmeelementes 10 dazu, einen Draht oder auch eine Mehrzahl Drähte zwischen den beiden Halbschalen 10a, 10b aufzunehmen. Das komplette Drahtendenaufnahmeelement 10 ist bevorzugt so geformt, dass es in einen Hüllzylinder (nicht gezeigt) mit bevorzugt kreisförmiger Grundfläche hineinpasst. Alle anderen zylindrischen Formen, die nach allgemeinen mathematischen Grundsätzen als Zylinder bezeichnet werden können, sind als Hüllzylinder ebenso denkbar.

Jede der Halbschalen 10a bzw. 10b weist bevorzugt wenigstens eine Nut oder eine Mehrzahl zwischen Vorsprüngen ausgebildete Nuten 13 auf, die zur Aufnahme je eines Wickeldrahtes dienen. Wird ein Wickeldraht in den Schlitz 11, 12 geschoben und wird das Drahtendenaufnahmeelement 10 anschließend um seine Längsachse gedreht, wird der Draht auf dem Drahtendenaufnahmeelement 10 aufgewickelt und dabei in einer der Nuten 13 geführt. Durch das Durchführen mehrerer Umdrehungen kann eine beliebige Drahtendenlänge auf dem Drahtendenaufnahmeelement 10 aufgewickelt werden. Die bevorzugt vorgesehenen Nuten 13 dienen vor allem dazu, eine Mehrzahl zu geführter Drähte separat voneinander aufzuwickeln und dabei voneinander getrennt zu halten. Denkbar ist natürlich auch, dass das Drahtendenaufnahmeelement über gar keine Nuten verfügt, sondern lediglich ein Block ist, um welchen Drahtenden gewickelt werden.

Der von der Stirnseite des Drahtendenaufnahmeelementes 10 zugängliche Zwischenraum 14 zwischen den beiden Halbschalen 10a und 10b ist bevorzugt so ausgebildet, dass er auf ein später noch zu diskutierendes Wickelelement - bevorzugt unter Ausbildung eines Formschlusses - aufgeschoben werden kann.

An beiden Seiten des Drahtendenaufnahmeelementes 10 weist dieses Aussparungen 17 auf, die durch rechtwinklig zueinander stehende gerade Abschnitte 15, 16 gebildet werden, welche Teil der die Nuten 13 seitlich begrenzenden Vorsprünge sind. Diese Aussparungen 17 liefern Biegekanten 15 und letztlich Arbeitsraum für das Schränken der auf das Drahtendenaufnahmeelement 10 aufgewickelten Drahtenden; Schränken meint letztlich eine Verschiebebewegung des bewickelten Drahtendenaufnahmeelementes 10 in dessen axialer Richtung relativ zu einem anderen Maschinenteil einer erfindungsgemäßen Wellenwickelvorrichtung, welches seinerseits die Drähte festhält, deren Enden auf das Drahtendenaufnahmeelement 10 aufgewickelt sind.

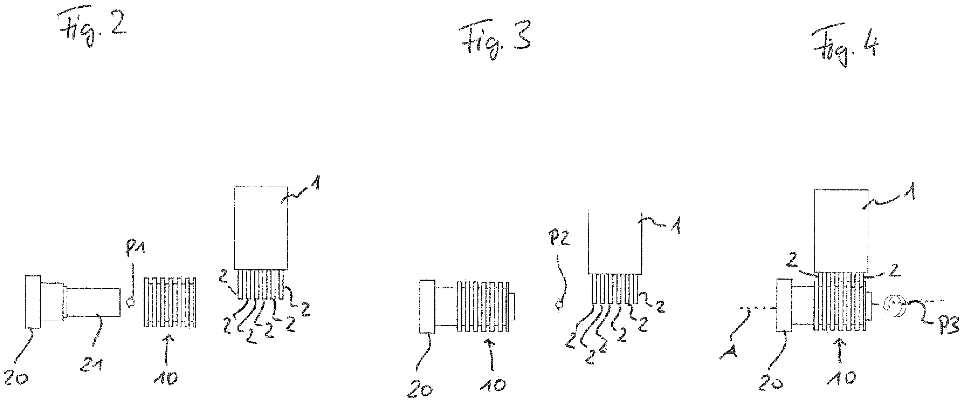

Das erfindungsgemäße Verfahren bzw. die erfindungsgemäße Vorrichtung wird nachfolgend anhand einer beispielhaften Verfahrensabfolge näher erläutert, welche in den Figuren 2 - 7 illustriert ist.

Hierzu umfasst die erfindungsgemäße Wellenwickelvorrichtung zum einen eine Drahtauslassdüsenanordnung 1, aus der einer oder eine Mehrzahl Drähte 2 herausgeführt werden. Damit die Enden der Drähte 2 auf das erfindungsgemäße Drahtendenaufnahmeelement 10 aufgewickelt werden können, wird dieses zunächst (Pfeil P1 in Figur 2) an einem antreibbaren bzw. angetriebenen Wickelelement 20 angebracht, im gezeigten Beispiel wird es in Pfeilrichtung P1 auf einen am Wickelelement 20 vorgesehenen Wickeldorn 21 aufgeschoben. Diese Verbindung geschieht bevorzugt formschlüssig, sodass das Drahtendenaufnahmeelement 10 mit den Wickelelement 20 mit dreht.

Ist das Drahtendenaufnahmeelement 10 mit dem Wickelelement 20 verbunden, werden die Enden der Drähte 2, die entweder aus der Drahtauslassdüsenanordnung 1 kommen oder bereits an einer ansonsten fertig gestellten Wellenwickelmatte (nicht gezeigt) heraus stehen, in die - bevorzugt schlitzförmige - Drahteinführöffnung 11, 12 (vergleiche Figur 1) des Drahtendenaufnahmeelementes 10 eingebracht. Dies geschieht durch relatives Bewegen zwischen Drahtenden 2 und Drahtendenaufnahmeelement 10. Dies ist in Figur 3 durch den Pfeil P2 angedeutet. In welcher Weise die Relativbewegung erfolgt, bleibt dem Fachmann an dieser Stelle überlassen, eine Möglichkeit ist, die vorstehenden Drahtenden 2 in axialer Richtung des Wickelelements 20 demselben zuzustellen. Andere Möglichkeiten sind natürlich genauso denkbar.

Ist die Anordnung der Drahtenden in der Drahteinführöffnung des Drahtendenaufnahmeelementes 10 erfolgt, wird das Wickelelement 20 um dessen Längsachse A (vergleiche Pfeil P3) angetrieben und so gedreht, wodurch die Drahtenden 2 auf dem mitdrehenden Drahtendenaufnahmeelement nach Art eines Lockenwicklers aufgewickelt werden, Figur 4. Dieser Prozess dauert so lange an, bis die gewünschte Länge der Drahtenden auf dem Drahtendenaufnahmeelement 10 aufgewickelt ist.

Wie in Figur 5 gezeigt, kann dann anschließend - wenn gewünscht - eine Schränkung des Drahtes vorgenommen werden. Dies geschieht dadurch, dass eine Relativbewegung des Wickelelements 20 und der Drahtauslassdüsenanordnung 1 vorgenommen wird. In Figur 5 wird zunächst eine Relativbewegung in Pfeilrichtung P4 erfolgen, die zu einem Abknicken der Wickeldrähte führt. Dieses Abknicken erfolgt an den Kanten 15 des Drahtendenaufnahmeelementes 10 (vergleiche Figur 1). Das Resultat ist dann in Figur 6 dargestellt.

Schließlich werden Wickelelement 20 und Drahtendenaufnahmeelement 10 wieder voneinander getrennt, damit die Wellenwickelmatte der weiteren Verarbeitung zugeführt werden kann, Figur 7.

Die Sequenz der Figuren 2 - 7 zeigt den Anfangsprozess, bevor die eigentliche Wellenwickelmatte erstellt wird. Natürlich kann gleichermaßen das beschriebene Verfahren eingesetzt werden, um bei einer bereits fertigen Wellenwickelmatte die entsprechenden Drahtenden aufzuwickeln. Dazu wird am Ende des Herstellungsprozesses einer Wellenwickelmatte der aus der Drahtauslassdüsenanordnung 1 kommende Wickeldraht abgetrennt und anschließend über den gezeigten Prozess mit dem Wickelelement 20 und dem darauf befindlichen Drahtendenaufnahmeelement 10 aufgewickelt.

## Patentansprüche

1. Wellenwickelvorrichtung mit einer Drahtauslassdüsenanordnung (1) zum Zuführen von einem Wickeldraht (2) oder einer Mehrzahl von Wickeldrähten (2), wenigstens einem Drahtendenaufnahmeelement (10), welches zur Aufnahme wenigstens eines Drahtendabschnitts des Wickeldrahtes (2) ausgebildet ist, und mit einem, insbesondere angetriebenen, Wickelelement (20), welches um eine Drehachse (A) drehbar gelagert ist und auf oder an welchem das Drahtendenaufnahmeelement (10) drehfest montiert, insbesondere aufgeschoben, werden kann.

2. Wellenwickelvorrichtung nach Anspruch 1,
**dadurch gekennzeichnet,**
**dass** das Drahtendenaufnahmeelement (10) eine, insbesondere bogenförmige, Nut (12) oder eine Mehrzahl, insbesondere bogenförmige, Nuten (13) zur Aufnahme wenigstens eines darauf aufgewickelten Drahtendabschnitts aufweist.

3. Wellenwickelvorrichtung nach Anspruch 1 oder Anspruch 2,
**dadurch gekennzeichnet,**
**dass** das Drahtendenaufnahmeelement (10) wenigstens eine, insbesondere als Schlitz ausgebildete, Drahteinführöffnung (11) zum Einführen des Drahtendabschnitts aufweist.

4. Wellenwickelvorrichtung nach einem der vorigen Ansprüche,
**dadurch gekennzeichnet,**
**dass** Drahtendenaufnahmeelement (10) ein aus zwei auf der Außenseite bogenförmigen Segmenten (10a, 10b) gebildetes Element mit einem zylindrischen, bevorzugt kreiszylindrischen, Hüllkörper ist.

5. Wellenwickelvorrichtung nach Anspruch 4,
**dadurch gekennzeichnet,**
**dass** zwischen den Segmenten (10a, 10b) eine, insbesondre als Schlitz ausgebildete, Drahteinführöffnung (11) angeordnet ist.

6. Wellenwickelvorrichtung nach Anspruch 4 oder 5,
**dadurch gekennzeichnet,**
**dass** die Segmente (10a, 10b) an einer ihrer in Axialrichtung des Hüllkörpers liegenden Stirnseiten miteinander verbunden sind.

7. Wellenwickelvorrichtung nach Anspruch 4, 5 oder 6,
**dadurch gekennzeichnet,**
**dass** die Segmente (10a, 10b) über wenigstens einen Stegabschnitt miteinander verbunden sind.

8. Wellenwickelvorrichtung nach einem der vorigen Ansprüche,
**dadurch gekennzeichnet,**
**dass** das Wickelelement (20) eine Aufnahmekontur, insbesondere eine Aussparung, bevorzugt einen Schlitz, aufweist, wobei die Aufnahmekontur zur Aufnahme, zur Fixierung und/oder Mitnahme des Drahtendenaufnahmeelements (10) dient.

9. Wellenwickelvorrichtung nach einem der vorigen Ansprüche,
aufweisend eine Trennvorrichtung zum Abtrennen des Wickeldrahtes.

10. Wellenwickelverfahren, bei dem insbesondere eine Wellenwickelvorrichtung nach einem der vorigen Ansprüche eingesetzt wird und bei welchem eine Wellenwickelmatte aus einer Mehrzahl Wickeldrähten (2) erzeugt wird,
**dadurch gekennzeichnet,**
**dass**
i) die Drahtendabschnitte der Wickeldrähte (2) auf ein Drahtendenaufnahmeelement (10) aufgewickelt werden.

11. Wellenwickelverfahren, nach Anspruch 10,
**dadurch gekennzeichnet,**
**dass** der Schritt i) vor und/oder nach dem Herstellen der Wellenwickelmatte ausgeführt wird, indem Drahtendabschnitte einem Drahtendenaufnahmeelement (10) zugeführt und auf dieses Drahtendenaufnahmeelement (10) in einer vorgegebenen Länge aufgewickelt werden.

12. Wellenwickelverfahren nach Anspruch 11,
**dadurch gekennzeichnet,**
**dass** zunächst ein Drahtendenaufnahmeelement (10) bereitgestellt und an einem Wickelelement (20) montiert, insbesondere darauf aufgeschoben, wird und sodann Drahtendabschnitte dem Drahtendenaufnahmeelement (10) zugeführt und von diesem gefasst und durch Drehen des Wickelelements (20) und Mitdrehen des Drahtendenaufnahmeelements (10) aufgewickelt werden.

13. Wellenwickelverfahren nach einem der Ansprüche 10 bis 12,
**dadurch gekennzeichnet,**
**dass** nach dem Schritt i) ein Schränken des der Wickeldrähte erfolgt.

14. Wellenwickelverfahren nach einem der vorigen Ansprüche,
**dadurch gekennzeichnet,**
**dass** nach dem Schritt i) Wickelelement (20) und Drahtendenaufnahmeelement (10) voneinander getrennt werden.
